(19) Europäisches Patentamt
European Patent Office
Office européen des brevets

(11) **EP 2 727 690 A1**

(12) **EUROPÄISCHE PATENTANMELDUNG**

(43) Veröffentlichungstag:
**07.05.2014 Patentblatt 2014/19**

(21) Anmeldenummer: **13191218.0**

(22) Anmeldetag: **31.10.2013**

(51) Int Cl.:
*B27K 3/15* (2006.01)    *B27M 1/02* (2006.01)
*B27M 3/00* (2006.01)    *B32B 21/04* (2006.01)
*B32B 21/13* (2006.01)    *C08H 8/00* (2010.01)
*C08L 7/02* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.11.2012 DE 102012021349**
**10.05.2013 DE 102013008058**

(71) Anmelder:
• **Stelzer, Roland**
**72764 Reutlingen (DE)**

• **Müller, Andreas**
**72631 Aich Neuenhaus (DE)**

(72) Erfinder: **Stelzer, Carol**
**8057 Zürich (CH)**

(74) Vertreter: **Meissner, Bolte & Partner GbR**
**Anwaltssozietät GbR**
**Widenmayerstrasse 47**
**80538 München (DE)**

(54) **Holzkörper mit einem Gehalt an Kautschuk, dessen Verwendung sowie Verfahren zu dessen Herstellung**

(57) Beschrieben wird ein Holzkörper mit einem Gehalt an Kautschuk und Klebstoff, erhältlich durch ein Verfahren umfassend das Imprägnieren von mindestens zwei Holzteilen mit einem Gemisch aus wässrigem Kautschuk-Latex und wässrigem Klebstoff, insbesondere in Form eines Leims, das Inkontaktbringen der imprägnierten Oberflächen verschiedener Holzteile, das Verpressen der Holzteile zu einem Verbundkörper und anschließendes Trocknen. Es besteht auch die Möglichkeit, den in den Holzkörper eingebrachten Kautschuk zu vulkanisieren oder einen vorvulkanisierten Kautschuk zu verwenden. Ferner wird die vorteilhafte Verwendung dieses Holzkörpers in Gebäuden, Einrichtungen und Ausstattungen von Wohnungen sowie in Fahrzeugen auf dem Lande und im Wasser sowie ein Verfahren zu dessen Herstellung beschrieben. Dieser Holzkörper zeichnet sich durch seine besondere Elastizität und eine verbesserte Energiedissipation und damit hohe Kerbschlagzähigkeit, Bruchsicherheit und gute Dämpfung aus, die sich über Parameter wie die Kautschukmenge und zusätzliche Inhaltsstoffe sehr fein auf einen gewünschten Bereich einstellen lassen. Dies macht entsprechende Holzkörper als Werkstoff für eine Reihe von neuen Anwendungen interessant.

EP 2 727 690 A1

## Beschreibung

Die Literaturstelle Journal of Biological Sciences 6 (3): 490-500, 2006 betrifft die Verwendung eines Trans-1,4-Isopren-Gummis als Heißschmelzklebstoff zum Verbinden von Holzteilen, insbesondere zur Herstellung von Spanplatten. Hierbei werden natürlicher Kautschuk (TIR Gutta Percha), synthetischer Kautschuk (TIR Synthetic) und mit Maleinsäureanhydrid modifizierter MTIR Gutta Percha und MTIR Synthetic als Klebstoffe in einem Heißpressverfahren zur Herstellung von Sperrholz getestet. Mit Maleinsäureanhydrid modifizierte Kautschukvarianten führen zu besseren Resultaten. Auch die GB 225,251 (veröffentlicht 1924) befasst sich im Wesentlichen mit einem Heißpressverfahren zur Herstellung von Holzverbundkörpern unter Verwendung eines Heißschmelzklebstoffs. Hier werden Holzplatten mit Hilfe von Kautschuk als Heißschmelzklebstoff verbunden. Die auf diese Weise hergestellten Holzverbundkörper sollen wasserundurchlässig sein. Der vorstehend beschriebene Stand der Technik geht über den technischen Gedanken, Verbundmaterialien durch Heißschmelzkleber herzustellen, im Wesentlichen nicht hinaus. So wird insbesondere nicht darauf abgestellt, den zu verbindenden Holzteilen spezielle Eigenschaften zu verleihen, was eine besondere Zielrichtung der nachfolgend geschilderten Erfindung ist.

Schließlich sei noch darauf hingewiesen, dass zur Vermeidung einer raschen Verrottung von Holz im Stand der Technik häufig Holzschutzmittel eingesetzt werden. So verwendet man zum Beispiel imprägnierende Flüssigkeiten auf Basis von Öl, Glykol oder organischen Lösungsmitteln, mit einem Gehalt an Wirkstoffen, insbesondere Bioziden, um die Oberfläche von Holz gegen nachteilige Witterungseinflüsse zu schützen. Darüber hinaus ist es üblich, Holzkörper beispielsweise bei der Verwendung in Holzfenstern dadurch zu schützen, dass eine Aluschale bzw. eine Schleiflackoberfläche angebracht wird.

Der Erfindung liegt die Aufgabe zugrunde, einen technischen Vorschlag zu unterbreiten, mit dem es möglich ist, den behandelten Holzkörpern bzw. Holzmaterialien eine hohe Verrottungsresistenz sowie eine wünschenswert eingestellte Elastizität und Festigkeit zu verleihen. Weiterhin befasst sich die vorliegende Erfindung mit der Aufgabe, die Dimensionsstabilität und das Vibrations- und Schalldämpfungsverhalten von Holzkörpern bzw. Holzmaterialien zu verbessern und einfachere Möglichkeiten für Formgebungsverfahren für solche Holzbauteile zur Verfügung zu stellen.

Ein weiteres Problem konventioneller Holzkörper und Holzverbundmaterialien besteht darin, dass bei einem Bruch der Körper Splitter entstehen, die ein hohes Verletzungsrisiko bergen. Dieses Problem kommt insbesondere dann zum Tragen, wenn das Holz durch starke Stossbelastung bricht, so dass entstehende Splitter mit hoher kinetischer Energie entstehen. Es besteht daher ein Bedarf an Materialien auf Basis von Holz, bei denen ein Bruch nicht zum Entstehen von Splittern führt und so ein Verletzungsrisiko minimiert wird. Dieses Material sollte sich zweckmäßig ebenso durch eine hohe Kerbschlagzähigkeit auszeichnen.

Erfindungsgemäß werden die vorstehenden Aufgaben durch einen Holzkörper mit einem Gehalt an Kautschuk und Klebstoff, der durch ein Verfahren umfassend das Imprägnieren von mindestens zwei Holzteilen mit einem Gemisch aus wässrigem Kautschuk-Latex und wässrigem Klebstoff, insbesondere in Form eines Leims, das Inkontaktbringen der imprägnierten Oberflächen verschiedener Holzteile, das Verpressen der Holzteile zu einem Verbundkörper und anschließendes Trocknen herstellbar ist, gelöst. Gegenstand der Erfindung sind ferner vorteilhafte Verwendungen entsprechend hergestellter Holzkörper sowie ein Verfahren zu dessen Herstellung, worauf noch eingegangen wird.

Mit "Imprägnieren" oder "Imprägnierung", wie diese Begriffe im Zusammenhang mit der vorliegenden Erfindung gebraucht werden, ist im Sinne des Wortes ein vollständiges oder teilweises Tränken oder Durchtränken gemeint. Zusätzlich soll von den Begriffen aber auch ein Beaufschlagen, ein Beschichten oder ein Bestreichen erfasst sein.

Der Kern des erfindungsgemäßen Holzkörpers besteht in der Kombination des natürlichen Werkstoffs Holz und einem Gemisch von synthetischem oder natürlichem Kautschuk-Latex und einem wässrigem Klebstoff, die einen neuen Holzwerkstoff bzw. Holzkörper mit besonders vorteilhaften Eigenschaften liefert.

Holz ist ein angenehmer, seit Jahrtausenden verwendeter Baustoff, der sich dadurch auszeichnet, dass er leicht zu verarbeiten ist. Holz besteht insbesondere aus Cellulose, Hemicellulose und Lignin sowie aus diversen weiteren Zusatzstoffen, wie Mineralien. Durch die dem Holz eigene Zellstruktur hat das Material ein "asymmetrisches" bzw. anisotropes Festigkeitsprofil. Härte und Festigkeit hängen vom Ligninanteil ab, der die Zellwand verstärkt. Unter dem Einfluss von Wasser, Sauerstoff, UV-Licht, Bakterien, Pilzen und/oder Insekten verrottet Holz. Aufgrund der angesprochenen Zellstruktur des Holzes gibt es "leeren Raum" zwischen den Zellen und in den Zellen.

Der Begriff "Holz" im Sinne der Erfindung soll weitestgehend verstanden werden. Es ist darunter nicht nur klassisches Holzmaterial als Ausgangskörper zu verstehen, sondern auch ein solches, das man als "holzähnlich" bezeichnen könnte. Wichtig ist es dabei, dass das Ausgangsmaterial in Form eines holzartigen Materials die wesentlichen Bestandteile des Holzes enthält, so Cellulose, Hemicellulose und Lignin. Somit soll der Begriff "Holz" auch solche Materialien, die auf Bambus, Gräserarten, wie Palmengräser, und dergleichen zurückgehen, umfassen.

Die Begriffe "Kautschuk", "Latex" und " Kautschuk-Latex" werden in der folgenden Beschreibung synonym verwendet.

Der technologische Hintergrund, von dem die vorliegende Erfindung ausgeht, besteht einerseits darin, die "leeren Räume" von Holz oder holzartigen Materialien mit einem natürlichen oder synthetischen Kautschuk zu füllen;

andererseits ermöglicht der Klebstoff eine verbesserte Verbindung einzelner Holzstücke im Vergleich zur Verwendung von Kautschuk allein. Das Gemisch aus Kautschuk und Klebstoff sorgt dafür, dass die Holzporen zumindest im Bereich der Holzoberfläche mit unpolarem Material gefüllt werden und so ein Eindringen von Wasser in die Holzporen bei dessen späterer Verwendung unterdrückt wird. Die Holzoberfläche wird so gegenüber Wasser versiegelt. Darüber hinaus kann das auf Wasser basierende Kautschuk/Klebstoff-Gemisch tiefer in die Poren das Holzes eindringen als ein konventioneller nicht auf Wasser basierender Klebstoff, der Kautschuk als organischen Bestandteil enthält.

Die Erfindung bedient sich des Einsatzes eines flüssigen Latex, bei dem die flüssige Phase vorzugsweise wässrig ist. Der wässrige Latex kann auf synthetischem Kautschuk und/oder Naturkautschuk basieren und weist einen hohen Wasseranteil auf, der den Latex flüssig hält und die gewünschte Tränkung im Rahmen der Erfindung ermöglicht. Der Wasseranteil des Latex liegt vorzugsweise zwischen etwa 25 und 85 Gew. %, insbesondere zwischen etwa 35 und 70 Gew.-%. Wird im Rahmen der Erfindung ein Naturkautschuk-latex verwendet, so enthält dieser zur Konservierung und Stabilisierung Zusatzstoffe wie Ammoniak. Kommerzieller Naturkautschuklatex ist beispielsweise als "low" und "high ammonia content" Latex erhältlich und enthält etwa 0,3 bzw. etwa 0,8 Gew.-% Ammoniak. Im Rahmen der der vorliegenden Erfindung sind beide Varianten verwendbar, es ist jedoch bevorzugt wenn die Menge des Ammoniaks im Latex möglichst gering ist und insbesondere etwa 0,3 Gew.-% oder weniger beträgt. Das Einbeziehen von Ammoniak führt dazu, dass ein frühzeitiges Zusammenklumpen der Latexteilchen im flüssigen Latex verzögert und Bakterienbefall unterdrückt wird.

Als flüssiger Latex kann ein nicht vulkanisierter Kautschuk verwendet werden, es ist jedoch ebenso zweckmäßig einen vulkanisierten oder vorvulkanisierten Latex, vorzugsweise mit einem Wasseranteil zwischen etwa 25 und 85 Gew.-%, insbesondere 35 bis 70 Gew.-% einzusetzen.

In Einzelfällen kann es zweckmäßig sein, einen kommerziell erhältlichen Latex zu verdünnen, um somit die Viskosität des Latex zu vermindern und dessen Eindringen in das Holz zu begünstigen. Ebenfalls kann ein kommerziell erhältlicher Latex verdickt und dessen Viskosität erhöht werden, um eine bessere Verarbeitbarkeit zu gewährleisten. Zudem ist es möglich, die im wässrigen Latex dispergierten Teilchen durch zusätzliche Maßnahmen in ihrem Durchmesser zu reduzieren, um die nachfolgend beschriebene Imprägnierung des Holzes mit dem Latex zu erleichtern. Dies kann darauf zurückgehen, dass das Holz unterschiedlich große Poren hat, so dass im Einzelfall bei ausreichender Porengröße eine derartige Maßnahme nicht erforderlich, im anderen Fall jedoch geboten ist. Diesbezüglich bestehen verschiedene Einwirkungsmöglichkeiten. Beispielsweise kommen hier mit Wasser gut mischbare Flüssigkeiten, wie Methanol, Ethanol, Aceton oder dgl., in Frage. In Einzelfällen kann es sinnvoll sein, einen Aromaten, wie Toluol, einzubeziehen, der bei der nachfolgenden Behandlung unter Wärme entweichen sollte. Die Menge an den Durchmesser der dispergierten Kautschuk-Teilchen reduzierender organischer Flüssigkeit im Latex hängt vom Einzelfall ab. Diese lässt sich rein fachmännisch ermitteln.

Erfindungsgemäß erfolgt ein Trocknen bzw. Erhitzen des flüssigen Latex, insbesondere der wässrigen Latex, durch Imprägnierung des Holzes, wobei die flüssige Phase, insbesondere Wasser, aber auch die angesprochenen Lösungsmittel und/oder Ammoniak verdampft werden. Der im imprägnierten Holz zunächst noch vorliegende Kautschuk kann durch Vernetzung bzw. Vulkanisation von einem ursprünglich plastischen in den elastischen Zustand überführt werden. In jedem Fall ist, ob elastisch oder plastisch, das Kautschukmaterial innerhalb des Holzkörpers mit diesem sehr gut verbunden.

Das Kautschukmaterial dient in den erfindungsgemäßen Holzkörpern nicht nur dazu, die Zellstruktur des Holzes zumindest teilweise auszufüllen, zu verstärken und damit zu schützen, sondern verbindet im Zusammenspiel mit dem Klebstoff benachbarte Holzteile bzw. Schichten. Dabei werden Kerbschlagzähigkeits- und Dämpfungseigenschaften erzielt, die für erfindungsgemäße Holzkörper über denjenigen des zur erfindungsgemäßen Behandlung herangezogenen Ausgangsmaterials liegen.

Im Rahmen der Erfindung soll unter einem Kautschuk Folgendes verstanden werden: Kautschuk ist die Bezeichnung (nach DIN 53 501, November 1980) für unvernetzte, aber vernetzbare (vulkanisierbare), oder auch vorvernetzte bzw. vorvulkanisierte Polymere mit gummielastischen Eigenschaften bei Raumtemperatur. Bei höheren Temperaturen und/oder unter dem Einfluss deformierender Kräfte zeigt Kautschuk viskoses Fließen. Kautschuk kann daher unter geeigneten Bedingungen, wie sie auch erfindungsgemäß eingehalten werden können, formgebend verarbeitet werden. Die Vernetzbarkeit bzw. Vulkanisierbarkeit des Kautschuks setzt im Rahmen der Erfindung das Vorhandensein funktioneller Gruppen voraus, z.B. ungesättigte Kohlenstoff/Kohlenstoff-Bindungen, Hydroxy- oder Isocyanat-Gruppen, voraus, über die mit mehr-funktionellen Reagenzien in einem als Vulkanisation bezeichneten Prozess Kautschuk-Moleküle intermolekular miteinander verknüpft (vernetzt) werden. Kautschuk wird systematisch in Naturkautschuk und synthetischen Kautschuk unterteilt. Diese Begriffe sind dem Fachmann geläufig. Beide Kautschuktypen sind geeignet, das Ziel der vorliegenden Erfindung zu erreichen. Der Begriff "Kautschuk" bzw. Kautschuk-Latex ist weitestgehend zu verstehen. Hierzu im Einzelnen:

Es hat sich gezeigt, dass Naturkautschuk unter vielfältigen Gesichtspunkten besonders vorteilhaft ist, wobei insbesondere der ökologische Gesichtspunkt eine Rolle spielt. Daher wird für Holzkörper im Rahmen der Erfindung bevorzugt Naturkautschuk als Latexmaterial herangezogen. Bei Naturkautschuk handelt es sich um ein Produkt, das insbesondere dem Kautschukbaum (Hevea brasiliensis) entnommen wird. Allerdings gibt es noch weitere Naturkautschuk-Typen, die aber teilweise andere Eigenschaften aufweisen. Dies sind beispielsweise Balata (Balatabaum), Chicle-Gummi (Breiapfelbaum), Guttapercha (Guttaperchabaum) sowie Guayule-Kautschuk (Guayule-Pflanze). Naturkautschuk besteht aus dem Monomer Isopren (2-Methyl-1,3-butadien, $C_5H_8$), das in extrem einheitlicher Struktur zum Terpen cis-1,4-Polyisopren polymerisiert ist. Es wird den Polyterpenen zugeordnet. Dessen Gehalt im Kautschuk macht über 99% aus.

Im Rahmen der Erfindung lassen sich auch Synthesekautschuke heranziehen. Diese seien nachfolgend beispielhaft dargestellt, wobei ihre Spezifikation in Klammern angegeben ist: Butadien-Kautschuk (wie Naturkautschuk Doppelbindungen in der Hauptkette), Ethylen-Propylen-Kautschuk (gesättigte Hauptkette), Polyether-Amide (Stickstoff in der Hauptkette), Epoxid-Kautschuke (Sauerstoff in der Hauptkette), Urethan-Kautschuke (Stickstoff und Sauerstoff in der Hauptkette), Silikon-Kautschuke (SiloxanGruppen in der Hauptkette), Polysulfid-Kautschuk (Schwefel in der Hauptgruppe).

Unter den oben bezeichneten synthetischen Kautschuken ist der "Styrol-Butadien-Kautschuk" besonders vorteilhaft. Sein Kurzzeichen ist SBR. Es ist ein Copolymer aus 1,3-Butadien und Styrol. SBR enthält üblicherweise etwa 23,5 % Styrol und etwa 76,5 % Butadien. Abweichungen hiervon sind möglich. Bei höherem Styrolgehalt wird der Kautschuk thermoplastisch, bleibt aber vernetzbar. Ergänzend soll zum SilikonKautschuk angemerkt werden, dass hier beispielsweise von Mischungen aus Silikon-Polymeren, gegebenenfalls mit zusätzlichen Füllstoffen, in Form einer Latex zur Imprägnierung, fakultativ mit anschließender Vernetzung, in den Holzkörper eingebracht werden können.

Es ist ebenfalls möglich Mischungen aus natürlichem und synthetischem Kautschuk für die Herstellung erfindungsgemäßer Holzkörper einzusetzen.

Unter allen bezeichneten Kautschuktypen, natürlichen oder synthetischen Ursprungs, ist der Naturkautschuk bevorzugt, wenngleich der Synthese-Kautschuk, insbesondere der Butadien-Kautschuk in Einzelfällen zu besonders vorteilhaften erfindungsgemäßen erhaltenen Holzkörpern führt.

Hinsichtlich der mit dem Kautschuk Latex zu vermischenden wässrigen Klebstoffe unterliegt die vorliegende Erfindung keinen relevanten Beschränkungen. Grundsätzlich können sowohl klassische physikalisch abbindende Leime als auch physikalisch und/oder chemisch abbindende Harz-Klebstofflösungen als Klebstoff eingesetzt werden. Entscheidend für den Klebstoff sind vor allem seine adhäsiven und kohäsiven Eigenschaften wie insbesondere seine Adsorption, die Dipol-Dipol Wechselwirkungen, das Durchdringen des Holzes, die Diffusion und Thermodynamik. Im Rahmen der Erfindung geeignete Klebstoffe können unter anderem auf Urethanen, Acrylharzen, Chloropren, Maleinat/Vinylacetaten, aliphatischen oder inerten Phenolharzen oder Vinylacetaten beruhen. Als Acrylharze sind insbesondere basische Harze wie Acronal® DS 3502 von BASF geeignet, es ist jedoch auch möglich saure Acrylharze mit Basen wie Ammoniak zu neutralisieren. Ebenso ist die Verwendung von photochemisch härtbaren Acrylharzen möglich.

Ein im Zusammenhang mit dem vorstehenden Verfahren besonders geeigneter wässriger Klebstoff ist ein Leim. Ein Leim, wie dieser Begriff in der vorliegenden Erfindung verwendet wird, ist eine wässrige Lösung bzw. Dispersion eines Klebstoffs gemäß DIN 16920. Bei einem Leim kann es sich demzufolge um eine Lösung bzw. Dispersion von tierischen, pflanzlichen oder synthetischen Grundstoffen in Wasser handeln. Zum Wassergehalt ist anzugeben, dass dieser vorzugsweise zwischen etwa 20 und 80 Gew.-%, in etwa zwischen 35 und 65 Gew.-% liegt.

Ein im Zusammenhang mit der vorliegenden Erfindung besonders geeigneter Leim ist ein Holzleim. Holzleime werden gemäß der DIN/EN 204 in unterschiedliche Beanspruchungsgruppen unterteilt (D1, D2, D3 und D4), die sich in ihren Mindestscherfestigkeiten und ihrem Verhalten unter Feuchtigkeits- und Wassereinwirkung unterscheiden.

Hinsichtlich der im Leim verwendeten Grundstoffe unterliegt die vorliegende Erfindung keinen relevanten Beschränkungen. So können im Rahmen der vorliegenden Erfindung insbesondere Leime, ausgewählt aus Glutinleimen, Caseinleimen, Harnstoff-Form-aldehydharzleimen, Phenol-Formaldehydharzleimen, Resorcin-Formaldehydharzleimen, Formaldehyd-armen Polykondensationsleimen, Formaldehyd-armen Dispersionsleimen oder Polyurethanleimen, eingesetzt werden.

Ein Glutinleim ist aus tierischen Abfällen höherer Tiere (leimgebender Körper) erhältlich und wird durch Auskochen gewonnen. Dabei entsteht eine Gallerte, deren Hauptbestandteil das Glutin (eine Einweißverbindung) ist und den Leimen ihren Namen gibt. Nach ihrer Herkunft unterscheidet man verschiedene Glutinleime, wie insbesondere Knochenleim, Hautleim, Hasenleim, Fischleim oder Hausenblasenleim. Glutinleime zeichnen sich durch ihre hohe Klebekraft aus. Zudem weisen Glutinleime den Vorteil auf, dass eine reversible Leimung möglich ist.

Caseinleim, wie dieser Ausdruck in der hier beschriebenen Erfindung verwendet wird, umfasst Casein-gelöschten Kalk. Dabei handelt es sich um einen natürlichen Leim, der im Gegensatz zum Glutinleim wasserfest und sehr hitzebeständig ist. Caseinleim ist als Pulvermischung zum Anrühren mit Wasser erhältlich und kann durch ausgiebiges Vermengen von Magerquark mit gelöschtem Kalk (Verhältnis ca. 4 bis 5:1) hergestellt werden. Caseinleim weist den Vorteil auf, dass er eine Verklebung mit hoher Elastizität, Feuchte- und Schimmelbeständigkeit sowie Hitzebeständigkeit ermöglicht, was diesen Leim besonders für Verwendungen im Außenbereich geeignet macht.

Harnstoffformaldehydharzleime (auch Polykondensationsleim oder UF-Leime genannt) bestehen aus Kunstharz in Verbindung mit Formaldehyd. Entsprechende Leime werden als Einkomponentenleim, in dem der Härter bereits untergemischt ist, als Zweikomponentenleim, in dem Leim und Härter getrennt vorliegen, sowie als Leimfolie angeboten. Ein Nachteil dieses Leims ist der stechende und kaum vermeidbare Formaldehydgeruch.

Resorcin-Formaldehydharzleime (auch RF-Leime) bestehen aus flüssigem Leim und pulverförmigem Härter. Entsprechende Leime sind kochfest und weisen sehr gute Witterungs- und Hitzebeständigkeiten auf.

Bei Formaldehyd-armen Polykondensationsleimen wird Formaldehyd für die Härtung der Leimmasse zugegeben. In diesen Produkten wird jedoch die Reduktion von freiem Formaldehyd durch Zusatz von Formaldehydfängern bzw. durch die Verringerung des Formaldehydanteils erreicht. Entsprechende Leime weisen eine geringere Bindefestigkeit, jedoch im Vergleich zu anderen Polykondensationsleimen eine kürzere Topfzeit auf.

Bei Formaldehyd-armen Dispersionsleimen (die auch als Weißleime bezeichnet werden) handelt es sich um Leime, die häufig auf Polyvinylacetat als Bindemittel beruhen, welches gebrauchsfertig in Wasser vorliegt. Bei den Leimen handelt es sich in der Regel um Dispersionen mit weißer Farbe, die nach Aushärtung ein transparentes Erscheinungsbild aufweisen. Die pH-Werte dieser Leime liegen in der Regel im Bereich von 3 bis 5, während sich die Viskositäten, je nach Verwendungszweck, stark unterscheiden können.

Polyurethanleime sind schließlich eine relativ neue Entwicklung für den Holzbereich und werden als einkomponentige Polyurethanleime angeboten. Entsprechende Leime sind in der Regel wasserfest und sind neben Holz auch für andere klebbare Materialien verwendbar. Polyurethanleime sind in der Regel thermisch aktivierbar, und beispielsweise unter dem Handelsnamen Dispercoll® U von Bayer erhältlich.

Bei der Verarbeitung von Holz sind Formaldehyd-haltige Verarbeitungsmittel unerwünscht, da Formaldehyd eine giftige Substanz darstellt, die über die Nutzungszeit von Holzgegenständen aus diesen in die Umgebungsluft freigesetzt wird. Daher besteht in der Holzverarbeitungsindustrie ein starker Bedarf nach möglichst Formaldehyd-freien Verarbeitungsmittel. Der erfindungsgemäße in das Holz eingebrachte Kautschuk setzt kein Formaldehyd frei, so dass es im Zusammenhang mit der vorliegenden Erfindung bevorzugt ist, wenn auch ein in das Holz einbezogener Klebstoff möglichst kein Formaldehyd enthält oder freisetzt. Die Verwendung von Formaldehyd-armen oder -freien Leimen, insbesondere von Weisleimen, oder Harzen, insbesondere von Acrylharzen, ist daher im Rahmen der Erfindung besonders bevorzugt.

Hinsichtlich des Mischungsverhältnisses von wässrigem Klebstoff, insbesondere Leim, zum Kautschuk unterliegt die vorliegende Erfindung keinen wesentlichen Beschränkungen. So kann das Kautschuk-zu-Klebstoff-Verhältnis in weiten Bereichen variieren, insbesondere in einem Bereich von 100 : 1 bis 1 : 10. Wird der Kautschukanteil jedoch zu gering gewählt, so führt dies nicht mehr zu einer gewünschten Veränderung der elastischen Eigenschaften des Holzes. Ein bevorzugtes Kautschuk-zu-Leim-Verhältnis liegt im Rahmen der vorliegenden Erfindung in einem Bereich von 50:1 bis 2:1, besonders bevorzugt 20:1 bis 2:1 und insbesondere 10:1 bis 4:1. Die vorstehenden Verhältnisse beziehen sich jeweils auf die nicht flüchtigen Komponenten im Klebstoff und Latex, d.h. das in Latex und Klebstoff enthaltene Wasser und andere flüchtige Bestandteile werden in diesem Verhältnis nicht berücksichtigt.

Zu bevorzugten Ausführungsformen des erfindungsgemäßen Holzkörpers lässt sich Folgendes ausführen:

So wird es bevorzugt, dass der Holzkörper einen vulkanisierten Kautschuk zur Einstellung elastischer Eigenschaften enthält. Es ist vorteilhaft, dass der Holzkörper auf Holz der Kiefer, Lärche, Fichte, Buche, Eukalyptus, Tanne, Pappel oder Pinie, vorgesehen insbesondere für Bauzwecke, aber auch auf Holz von Buche, Kiefer, Fichte, Eiche, Esche, Kastanie, Birke, Kirsche, Ahorn oder Nuss, vorgesehen insbesondere für Möbelausstattung, beruht.

Für die Vulkanisierung erfindungsgemäß modifizierter Holzkörper kann auf die der Industrie zur Verfügung stehenden Vulkanisierungssysteme zurückgegriffen werden, welche insbesondere Aktivatoren (Zinkoxid, Stearinsäure), Vulkanisationsmittel (Schwefel-löslich bis 2 phr in Naturkautschuk, Peroxide), Beschleuniger, Aushärtungssystem, Retarder (N-Cyclohexylthiophthalimide (CTP), Bis(3-trieth-oxysily-Ipropyl)tetrasulfan (TESPT)), umfassen und mit denen die Verarbeitungsparameter wie die Temperatur und Zeit je nach Bedarf angepasst werden können.

Darüber hinaus ist es zweckmäßig, dem Holzkörper zur Eigenschaftssteuerung, insbesondere zur Verbesserung der Beständigkeit und der mechanischen Eigenschaften, Zusatzstoffe einzuverleiben. Solche Zusatzstoffe sind insbesondere Flammschutzmittel (beispielsweise (Dialkyl-) para-phenylenediamin (PPDs)), Antioxidantien (Phenylendiamine, polymerisierte Dihydrochinone, auch gegen die negative Wirkung von Schwermetallen), Antiozonantien (Phenylendiamin), UV-Schutzmittel (PPDs), Temperatur-Stabilisatoren (PPDs), Bakterizide und Fungizide (Natrium-dimethyldithiocarbamat, Natrium 2-mercaptobenzothiazol, Tetramethylthiuramdisulfid, Dicarboximide, Triazine), Insektizide oder feuchtigkeitsabweisende Zusatzstoffe. Mechanische Eigenschaften wie die Festigkeit, die Steifigkeit, die Elastizität, das Quellen und Schwinden, die Härte, die Abriebfestigkeit, den Einreißwiderstand sowie die Langlebigkeit (Alkyl-aryl PPDs, Mercaptobenzothiazol (MBT) oder Wachse) können durch Additive ebenfalls verbessert werden (insbesondere auch durch Ruß, Siliciumdioxid, Silane mit Kopplungsmitteln, wie Bis(3-triethoxisilylpropyl)tetrasulfan (TESP), sowie Polybutadien). Die Haftung am Holz kann verbessert werden, indem der Kautschuk/Klebstoffmischung 2,5-Di-tert-amylhydrochinon zugesetzt wird. Zudem kann die Kautschuk/Klebstoffmischung mit Hilfe von aromatischen Harze und reaktiven Phenolharzen verstärkt werden, oder mit Kurzfasern verfestigt werden. Weiterhin ist es möglich der Kautschuk/Klebstoffmischung funktionelle Zusatzstoffe zur Verbesserung der Kälteflexibilität, der Beständigkeit gegenüber verschiedenen Medien oder der Optik beizumischen. Die Optik kann beispielsweise optimiert werden, indem Pigmente und/oder Farbstoffe herangezogen werden. Um eine unerwünschte Verfärbung zu vermeiden, können phenolische Antioxidantien und/oder Amine eingesetzt werden. Die Alterungsbeständigkeit der erfindungsgemäßen Holzkörper kann auch durch Oberflächenbehandlungen mit Lacken, Öl, Wachs, Kunstharzen oder durch Aufbringen von (Schutz)-Folien verbessert werden. Vorzugsweise werden die Additive bzw. Zusatzstoffe unter dem Gesichtspunkt der Gesundheits- und Umweltfreundlichkeit ausgewählt.

Besonders bevorzugte Zusatzstoffe zur Eigenschaftssteuerung sind im Rahmen der vorliegenden Erfindung Pigmente, Farbstoffe, Füllstoffe, insbesondere Ruß, Weichmachern, UV-Stabilisatoren, Antioxidantien, Antiozonantien, Bakteriziden, Fungiziden, Insektiziden, Flammschutzmitteln, aliphatischen oder aromatischen Harzen, inerten oder reaktiven Phenolharzen und/oder Kurzfasern.

Zur Einstellung weiterer gewünschter Eigenschaften, insbesondere zur Versiegelung der Oberfläche des Holzkörpers und zur Verbesserung der Witterungsbeständigkeit, können Oberflächenbeschichtungen in Form beispielsweise von Lacken oder einer zusätzlichen Latexbeschichtung von Vorteil sein. Gegebenenfalls können auch Anstriche aufgebracht werden. Für die Latexbeschichtung kann reiner Kautschuklatex eingesetzt werden, d.h. im Gegensatz zur in dieser Erfindung verwirklichten Verbindung von zwei Holzstücken ist ein Zusatz von Klebstoff zum Latex für eine Oberflächenbeschichtung nicht erforderlich. Eine mit Kautschuk behandelte Holzoberfläche hat eine dem unbehandelten Holz ähnliche Optik, wenngleich sie einen höheren Glanz aufweist. In der Haptik ergeben sich jedoch Unterschiede. Der Holzkörper springt beim Fallenlassen auf den Boden etwas zurück. Das Geräusch beim Auftreffen ist gedämpfter als bei massivem unbehandeltem Holz. Dies geht auf die bereits angesprochene erhöhte Elastizität zurück. Zudem kann ein mit Kautschuk oberflächenbehandeltes Holzstück längere Zeit im Wasser oder in der Erde liegen, ohne dass Veränderungen auftreten.

Des Weiteren gilt es als bevorzugt, wenn der Holzkörper als Holzplatte, Holzkörper mit Schichtstruktur, insbesondere Sperrholz, als Formteil aus verpressten kleinstückigen Holzteilen, insbesondere Holzspänen, Stab und/oder Stange ausgebildet ist.

Die in solche Holzkörper einzubeziehenden Holzplatten oder Holzfurniere weisen vorzugsweise eine Dicke im Bereich von 0,3 bis 6 mm, insbesondere 0,8 bis 4 mm, auf.

Wie oben zum Ausdruck gebracht, zeigen die erfindungsgemäßen Holzkörper überraschende vorteilhafte Eigenschaften. Daraus ergeben sich viele nützliche Verwendungsmöglichkeiten:

Der Einsatz des erfindungsgemäßen Holzkörpers im Bau- und Einrichtungssektor, dies im weitesten Sinne, ist von hohem wirtschaftlichen Interesse. Die Vorteile sind zwar bei den verschiedenen Produkten unterschiedlich, zeigen sich jedoch insbesondere in einer verlängerten Lebensdauer, besserer Verarbeitbarkeit, vorteilhafter Gewichtsersparnis und wünschenswerter Elastizität und Festigkeit. Demzufolge betrifft die vorliegende Erfindung die Verwendung der erfindungsgemäßen Holzkörper in Gebäuden, Einrichtungen und Ausstattungen von Wohnungen und Fahrzeugen auf dem Lande und auf dem Wasser.

Im Baubereich verwirklicht sich die Erfindung besonders vorteilhaft in Fenstern, Türen, Dachstühlen, Lattungen, Baustoffen, Bauholz mit den verschiedensten Einsatzzwecken, Zäunen, Dachdeckungen, Pergola/Carports/Pavillons, Federholzleisten, Trägerelementen aller Art (z.B. Schildern oder mit statischer Aufgabe), Brückenteilen, Stegen und Anlegestellen am Wasser, sowie für Restaurationen an feuchten Stellen. Im Bereich der Einrichtung bzw. der Ausstattung erlangt die vorliegende Erfindung besonders praktischen Wert in Fußbodenbelägen, Terrassenbelägen, Gartenmöbeln, Parkbänken, Möbeln, Handläufen, Arbeitsplatten, Lattenrosten für Betten, Design-Lichtschaltern, Türdrückergarnituren und Armaturen. Auch in anderen Bereichen führt die Erfindung zu besonderen Vorteilen, so im Bootsbau/Schiffsbau, in Wohnwagen, Anhängern, Fahrzeugen, insbesondere Fahrzeuginnenausstattungen, Skate- oder Snowbords, Handwagen, Werkzeugschäften, Designschmuck, Uhrengehäusen/ - Armbändern, im Modellbau, in Gefäßen, Abdeckungen, Gehäusen, Knöpfen, Nieten, Sitzschalen für Autos, Kindersitze, etc. und Schwingungsdämpfern.

Im Bereich der Fahrzeuginnenaustattungen gilt Holz als exklusiver Werkstoff. Nachteilig bei konventionell verarbeitetem Holz ist jedoch die Bildung von Splittern bei Unfällen, die ein erhöhtes Verletzungsrisiko darstellen. Zudem weist Holz eine geringe Biegsamkeit auf, was in der Verarbeitung Schwierigkeiten bereitet. Die erfindungsgemäßen Holzkörper bieten eine Lösung für beide Probleme, da auch beim Bruch der Körper keine signifikante Splitterbildung auftritt und die Körper zudem deutlich biegsamer sind als unbehandeltes Holz.

Gegenstand der Erfindung ist des Weiteren ein Verfahren zur Herstellung erfindungsgemäßer Holzkörper. Dieses ist dadurch gekennzeichnet, dass gegebenenfalls vorgetrocknete und/oder vorerhitzte Holzteile, insbesondere in Form von Platten oder Furnieren, mit einer Mischung aus Kautschuk-Latex- bzw. einer kolloidalen Kautschuk-Dispersion, und einem wässrigen Klebstoff, gegebenenfalls bei erhöhter Temperatur, imprägniert, die imprägnierten Oberflächen verschiedener Holzteile miteinander in Kontakt gebracht, zu einem Verbundkörper verpresst und anschließend getrocknet werden. Hierbei gelten die vorstehenden Ausführungen, die sich mit Modifizierungen befassen, so beispielsweise die Modifizierung des Dispergiermittels Wasser durch damit mischbare organische Lösungsmittel, wie Methanol und dgl., beziehungsweise einer Vorbehandlung mit Ammoniak.

Das erfindungsgemäße Verfahren lässt sich wie folgt mit Vorteil weiterbilden:

So kann es vorteilhaft sein, wenn die Imprägnierung auf mindestens einer Oberfläche des Holzes so lange durchgeführt wird, bis sich ein Gleichgewichtszustand eingestellt hat. Das Imprägnieren kann auch durchgeführt werden, indem eine Kautschuk/Klebstoffmischung auf das Holz aufgestrichen bzw. das Holz mit dieser Kautschuk/Klebstoffmischung beschichtet wird. Die Temperatur ist hierbei nicht von kritischer Bedeutung. Dennoch ist es bevorzugt, wenn der Holzkörper für das Imprägnieren nicht wesentlich erhitzt wird, und eine Temperatur im Bereich von 20 bis 30°C aufweist. Ein Vorerhitzen über diesen Bereich führt zu einer verstärkten Schwindung des Holzes und einem ebenfalls verstärkten Wassergradienten. Dies kann dazu führen, dass das Wasser aus dem Latex zu schnell vom Holz aufgenommen und der Kautschuk/Klebstoffmischung Wasser entzogen wird. Dies kann eine vorzeitige Verklumpung des Latex begünstigen. Im Gegensatz dazu ist es von Vorteil, wenn die wässrige Kautschuk/Klebstoffmischung vorerhitzt wird. Dabei wird die Temperatur der wässrigen Kautschuk/Klebstoffmischung vor der Imprägnierung auf mindestens etwa 30°C, insbesondere etwas 30 bis 70°C eingestellt, wobei der Bereich von 40 bis 60°C besonders bevorzugt ist. Durch das Vorerhitzen der Kautschuk/Klebstoffmischung vermindert sich deren Viskosität, was ein anschließendes Eindringen in das Holz erleichtert.

Beim Vorerhitzen des Latex ist es notwendig, diesen möglichst gleichmäßig zu erhitzen, damit die Homogenität der Kautschuk/Klebstoffmischung nicht beinträchtig wird. Ein bevorzugtes Verfahren zum Vorerhitzen der Kautschuk/Klebstoffmischung beruht daher auf einem Verdünnen mit heißem Wasser, vorzugsweise mit einer Temperatur im Bereich von 60 bis 95°C.

Es kann im Einzelfall günstig sein, dass das erfindungsgemäße Verfahren mehrfach durchgeführt wird. Von besonderem Vorteil kann es des Weiteren sein, wenn die Kautschuk/Klebstoffmischung Zusatzstoffe enthält, um gewünschte Eigenschaften einzustellen, insbesondere handelt es sich dabei um diejenigen Zusatzstoffe, die vorstehend im Zusammenhang mit Vulkanisierungssystem, Antioxidantien, Füllen, Pigmenten, Farbstoffen, Fungizide, Klebstoffen etc. behandelt wurden.

Für das Tränken bzw. Imprägnieren von Holzwerkstoffen unterscheidet man üblicherweise zwischen Nichtdruckverfahren, die weniger intensiv sind, Druckverfahren, die eine intensive Behandlung ermöglichen, und Sonderverfahren. Für die erfindungsgemäße Tränkung kommen vor allem die Druckverfahren in Frage. Hier unterscheidet man zwischen Niederdruck- und Hochdruckverfahren. Niederdruckverfahren sind die Vakuumtränkung, die Doppelvakuumtränkung, die Desovag-Kombinationstränkung und das schon seit langem bekannte Saftverdrängungsverfahren (z.B. Boucherie, Gewecke, Gruber). Hochdruckverfahren sind die Volltränkung (Bréant, Bethell), die Spartränkung nach Rüping sowie nach Lowry, die Schwenkkesseltränkung sowie das Wechseldruckverfahren nach Henriksson. Es ist für den Fachmann verständlich, dass die unterschiedlichen Holzarten auch unterschiedlich tränkbar sind, dies im Hinblick auf die spezielle Holzart, aber auch auf die im jeweiligen Holz vorliegende Porengröße. Diese kann bei gleichem Holzmaterial, jedoch altersabhängig, auch unterschiedlich sein. So ist z.B. Splintholz in der Regel gut, z.B. bei Kiefer und Buche, aber bei Fichte oder Lärche nur eingeschränkt tränkbar, während Kernholz eher schwer tränkbar ist.

Alle Verfahren arbeiten mit einer jeweils typischen Abfolge von Normal-, Unter- und Überdruckphasen, wobei deren Reihenfolge, Dauer und Druckverlauf jeweils von der Holzart, dem Tränkmedium, der gewünschten Tränkintensität und der Eindringtiefe abhängen. Bei der Erprobung der Erfindung hat es sich gezeigt, dass ein Verfahren mit Vordruckphase im Allgemeinen weniger geeignet ist. In der Regel ist es zweckmäßig, eine Tränkung mit einleitender Trocknung des Holzes vor der Tränkmittelbeaufschlagung durchzuführen. Dazu kann das Holz erhitzt werden, es ist jedoch zweckmäßiger das Holz zunächst einem Vakuum auszusetzen, durch das die sich in den Hohlräumen des Holzes befindende Luft vor dem Imprägnieren entfernt wird. Dies gilt auch für das ursprünglich im Holz vorliegende Wasser. Die Trocknung, insbesondere die Vorvakuumphase sollte nicht zu lange erfolgen, da dies einerseits zu einer ungünstig langen Verarbeitungszeit und andererseits zu einer zu starken Trocknung des Holzes führt. Dies ist ungünstig, da es bei der anschließenden Imprägnierung zu einer Verklumpung des Latex kommen kann. Die Ursachen hierfür sind ähnlich wie bereits im Zusammenhang mit dem Vorerhitzen des Holzes erläutert. Zudem vermindert eine höhere Holzfeuchtigkeit die Abstoßung zwischen Latextröpfchen und dem Holz. Ein im Rahmen der vorliegenden Erfindung günstiger Zeitraum für die Vorvakuumphase beträgt etwa 10 bis 60 Minuten. Die Vakuumphase sollte vorzugsweise bei einem Druck von höchstens 100 mbar, besonders bevorzugt bei einem Druck von 1 bis 50 mbar und am meisten bevorzugt bei einem Druck von 5 bis 10 mbar, erfolgen.

Es folgt dann der Zyklus mit Beaufschlagung mit Tränkmittel bei Niederdruck oder Normaldruck, dann darauf schließlich vorteilhafterweise eine Druckphase. Es kann zweckmäßig sein, wenn dieser Zyklus mehrfach durchgeführt wird. Zudem hat es sich gezeigt, dass es innerhalb der Druckphase mit Vorteilen verbunden ist, wenn der Druckaufbau langsam, d.h. vorzugsweise über einen Zeitraum von 0,5 bis 5 h besonders bevorzugt 1 bis 2 h erfolgt. Weiterhin hat sich im Rahmen der Erfindung ein Druck im Bereich von 6-12 bar als zweckmäßig herausgestellt. Alternativ kann ein bevorzugter Verpressdruck von 0,5 bis 2,5 N/mm$^2$, insbesondere von 0,8 bis 1,5 N/mm$^2$, angegeben werden. Die Druckphase kann zudem, um ein günstiges Imprägnieren zu gewährleisten, über einen längeren Zeitraum durchgeführt werden, d.h. vorzugsweise für einen Zeitraum von 1 bis 24 h, besonders bevorzugt 3 bis 12 h, was aber bei dünnen Holzlagen in der Regel nicht erforderlich ist..

Bevorzugt ist es im Rahmen dieser Erfindung weiterhin, wenn als Ausgangsmaterial plattenförmige Holzkörper, insbesondere Holzfurniere, unter Wärme und Druckeinwirkung zu einem schichtförmigen Verbundgebilde verpresst werden.

Wenngleich wirtschaftlich nicht in jedem Falle sinnvoll, könnte man im Einzelfall auch ein besseres Ergebnis des Tränkens durch eine enzymatische Vorbehandlung des Holzes erzielen, wodurch sich vergrößerte Poren im Holz durch Zerstörung der Tüpfelmembran erhalten lassen. Weitere optionale Maßnahmen einer Vorbehandlung des Holzes umfassen eine Ammoniakvorbehandlung sowie die Zugabe von Hydroxid wie Natrium oder Kaliumhydroxid zum Latex für das Imprägnieren. Durch eine AmmoniakVorbehandlung des Holzes ist es möglich die im Holz vorhandenen sauren Gruppen zu neutralisieren. Dies führt dazu, dass beim anschließenden Imprägnieren eine Verklumpung des Latex beim Eindringen in das Holz vermindert wird, die dadurch entstehen kann dass dem Latex durch die sauren Gruppen stabilisierender Ammoniak entzogen wird. Die Hydroxidzugabe führt zu einem ähnlichen Resultat, wobei die Base zusätzlich ein Aufquellen der Holzwände begünstigt.

Die Temperatur, die bei der Imprägnierung zweckmäßigerweise gewählt wird, unterliegt keiner kritischen Einschränkung. Diese ist im Einzelfall fachmännisch zu ermitteln. So kann man im Allgemeinen davon ausgehen, dass die Temperatur des flüssigen Latex, insbesondere der wässrigen Latex, beim Imprägnieren vorzugsweise zwischen etwa Raumtemperatur (20°C) und 80°C liegt. Besonders vorteilhafte Ergebnisse werden erzielt, wenn die Temperatur beim Imprägnieren mit dem Latex im Bereich von etwa 30°C und 75°C, insbesondere im Bereich von etwa 40°C und 70°C, und speziell im Bereich von etwa 40°C bis 60°C liegt. Die Temperatur ist so zu wählen, dass die Viskosität der Imprägnierflüssigkeit so niedrig wie möglich ist, und, wenn eine anschließende Vulkanisierung durchgeführt werden soll, der Beginn der Vulkanisierung noch nicht wesentlich einsetzt, denn dies steht einer guten Tränkung entgegen.

Im Rahmen des erfindungsgemäßen Verfahrens kann eine Vulkanisierung des in das Holz eingebrachten Latex vorgenommen werden, wobei es sich bei dem Latex um ein nicht vernetztes Material, aber auch um ein teilweise vernetztes Material wie einen vorvulkanisierten Latex handeln kann. Nachdem der Naturkautschuk im Rahmen der Erfindung von besonderem Vorteil ist, wobei der Butadien-Kautschuk unter den aufgezählten Alternativen ebenfalls noch von Wert ist, seien die diesbezüglichen Vulkanisatoren wie folgt aufgeführt:

Für die Vulkanisation mit Schwefel sind als Aktivatoren Metalloxide, wie Zinkoxid, und Stearinsäure und als Beschleuniger Mercaptobenzothiazol (MBT), Benzothiazyl- und Benzothiazol, Sulfenamid, Thiuramdisulfid, Thiuramtetrasulfid, Dithiocarbamat (mit Natrium für Naturkautschuk und SBR und geringere Temperaturen, mit Kupfer nur für SBR, mit Zink für Naturkautschuk und Haltbarkeit, mit Nickel auch antioxidative Wirkung) sowie Guanidine von Vorteil. Als Retarder können N-Cyclohexylthiophthalimid (CTP), Bis(3-triethoxysilylpropyl)-tetrasulfan (TESPT), Bis(citraconimidomethyl)benzol zur Anwendung kommen. Thiophthalimid verhindert eine zu frühe Vulkanisation. Für die Vulkanisation mit Peroxiden können unterstützend Methacrylate zugegeben werden. Für SBR können Dibutylperoxide und Dicumylperoxide herangezogen werden, wohingegen für Naturkautschuk auch Dibenzoylperoxid verwendet werden kann. Der Ausvulkanisierungsgrad sowie die Füller des eingesetzten Vulkanisationsmittels haben Einfluss auf die Härte des ausvulkanisierten Materials und demzufolge auf die Festigkeit des fertiggestellten Holzkörpers. Eine alternative Vulkanisationsmethode beruht auf der β-Strahlung. Allerdings ist diese Methode teurer. Sie vermeidet aber Schwefel.

Der imprägnierte Holzkörper muss nach dem in Kontakt bringen der imprägnierten Oberflächen und dem Verpressen der Holzteile getrocknet werden, was durch beschleunigende Maßnahmen unterstützt werden kann. Die Trocknung kann auf verschiedene Weise geschehen, zum Beispiel durch Bestrahlen, so beispielsweise durch IR-Bestrahlen, aber auch durch Bestrahlen mit Mikrowellen, durch eine Heizpresse sowie durch Heißluft. Das Trocknen des imprägnierten Holzkörpers und gegebenenfalls die Vulkanisierung, die sich mit dem Trocknungsvorgang teilweise überlagern kann, können in zwei Schritten erfolgen, demzufolge auch bei unterschiedlicher Temperatur. Es ist bevorzugt, bereits beim Trocknen die Temperatur so zu wählen, dass damit gleichzeitig die gewünschte Vulkanisation bzw. Vernetzung der eingebrachten Kautschuktypen bewirkt wird. Aus wirtschaftlichen Gründen kann es angezeigt sein, an eine Trocknungsphase eine "Ruhephase" zur Ausvulkanisierung anzuschließen, um teure Maschinenkapazität nicht unnötig lange zu belegen.

Die oben angesprochene Vulkanisierung kann dadurch erfolgen, indem Schwefel einbezogen und der imprägnierte Holzkörper auf Temperaturen von beispielsweise etwa 70° bis 140°C erwärmt wird, so dass die gewünschte Vulkanisation abläuft. Die tatsächlich im Einzelfall gewählte Temperatur hängt auch davon ab, welcher Vulkanisator eingesetzt und welcher Vernetzungsgrad im Hinblick auf Elastizität bzw. Härte gewünscht wird. Nicht vulkanisierter Kautschuk ist viskoelastisch, während dieser durch Vulkanisierung in den elastischen Zustand überführt wird. Kautschuk, aus Naturlatex vulkanisiert, führt zu besonders günstigen elastischen Eigenschaften des Holzkörpers gemäß der Erfindung.

Wie nachfolgend noch detailliert ausgeführt, kann ein erfindungsgemäß hergestellter plattenförmiger Holzkörper unter Wärme- und Druckeinwirkung zu einem schichtförmigen Verbundgebilde verpresst werden. Dabei werden vorzugsweise kleinstückige Holzteile zu einem größeren Holzkörper zu verpresst bzw. zu verformt. Dies erfolgt z.B. mit jeweils im nicht zusammengesetzten Zustand getränkten Holzplatten, Furnierplatten, Holzriemen, Holzstückchen, Holzformteilen usw., die dann nach dem Tränken und vor dem Trocken, noch bevor eine eventuelle Vulkanisation durchgeführt wird, zusammengesetzt und dann gemeinsam verpresst und getrocknet werden. Dabei kann es ausreichend sein, die zu verbindenden Holzteile mit dem Latex zu beschichten oder zu bestreichen, was eine schnellere Weiterverarbeitung ermöglicht. Ein solches Vorgehen ist daher bei der Verarbeitung von Holzteilen zu Schichtholzkörpern im Rahmen der Erfindung bevorzugt.

Nach dem vorstehenden sind erfindungsgemäß bevorzugte Holzkörper beispielsweise erhältlich durch Imprägnieren von Holzplatten oder Holzfurnieren mit einer Mischung aus einer wässrigen Kautschuk-Latex und einem wässrigen Klebstoff, Verpressen der Holzplatten bzw. Holzfurniere zu einem Verbundkörper, insbesondere bei erhöhter Temperatur, und durch anschließendes Trocknen.

Dem Fachmann ist ohne weiteres erkennbar, wie er dieses Verfahren zur Herstellung von Verbundgebilden unter Nutzung des erfindungsgemäßen Gedankens modifizieren kann. Auch können im Einzelfall verschiedene plattenförmige Holzkörper gemäß der Erfindung miteinander dadurch verbunden werden, indem ein Verpressen mit Heißschmelzklebern bei geeignet hoher Temperatur vorgenommen wird. Diesbezüglich sei auf die eingangs dargestellten Möglichkeiten des Einsatzes von Kautschuk-Materialien zum Verbinden von Holzteilen zu Holzverbundkörpern verwiesen. Entsprechend kommt es darauf an, dass letztlich ein schichtförmiges Verbundgebilde vorliegt, bei dem in den einzelnen Schichten der Erfindungsgedanke verwirklicht hat, sei es mit oder ohne Vulkanisation der Latexteilchen. Ein wesentlicher Vorteil bei einer Behandlung von einzelnen Holzschichten eines schichtförmigen Verbundgebildes besteht darin, dass durch die Kombination von Latex und Klebstoffparameter, wie die mechanischen Eigenschaften der resultierenden Verbundkörper, fachmännisch eingestellt werden können. Entsprechende Schichtverbundkörper zeigen aufgrund der sehr geringen inneren Reibung des Gummis ein elastisches Verhalten, während der Klebstoffanteil die Klebefestigkeit erhöht und die Elastizität herabsetzen kann. Damit ist über das Klebstoff-zu-Kautschuk-Verhältnis eine genaue Steuerung der Elastizitätseigenschaften der resultierenden Verbundgebilde möglich. Ergänzend ist zu den Holzverbundkörpern bzw. geschichteten Platten anzumerken, dass es zweckmäßig ist, dass Wasser möglichst schnell aus diesen auszutreiben, bevor das Latex/Klebstoffgemisch weitgehend erhärtet ist. Hierbei spielt eine hohe Temperatur für das Wasser eine Rolle, während beim Latex eine Vorerwärmung von Wert ist, wobei es vermieden werden sollte, dass er längerfristig der Luft ausgesetzt ist, da er sonst die wünschenswerte Konsistenz verliert.

Nachfolgend soll die Erfindung technologisch erläutert werden, dies insbesondere im Zusammenhang mit vorteilhaften Eigenschaften, die hierbei in Erscheinung treten:

Durch die besondere Imprägnierung des Holzes gemäß der erfindungsgemäßen Lehre wird dessen Verrottung unterbunden oder zumindest gegenüber Vergleichsprodukten weitgehend reduziert. Der Grund dafür liegt darin, dass durch das eingebrachte Klebstoff/Kautschukgemisch Wasser, Luft, Bakterien, Pilze und Insekten nicht mehr in das Holz eindringen können oder das Eindringen zumindest stark verlangsamt wird. Diese Stoffe bzw. Mikroorganismen bleiben an der Oberfläche und können demzufolge innerhalb des Holzkörpers keine nachteiligen Folgen auslösen. Sie werden durch das eingesetzte Latex/Klebstoffgemisch abgehalten, insbesondere durch den darin enthaltenen Kautschuk, da dieser hydrophob ist. Speziell Insekten erkennen diesen Werkstoff nicht als Holz (fehlender Holzgeruch). Dadurch ist eine wesentlich längere Lebensdauer der aus dem ursprünglichen Holzwerkstoff hergestellten Holzkörper zu erzielen.

Bei der Verrottung von Holzkörpern spielen Rissbildungen durch Temperaturschwankungen eine wichtige Rolle. Diese Rissbildungen werden durch die elastischen Eigenschaften des eingebundenen Kautschuks stark vermindert. Die Resistenz gegen Verrottung lässt sich nach bekannten Verfahren messen. So werden beispielsweise Dauerhaftigkeitsklassen (1 bis 5) nach DIN EN 350-102 eingeteilt. Zudem gibt es Freilandversuche mit Erdkontakt gemäß DIN EN 350-1.

Die Erfindung erweist sich nicht nur dadurch als besonders vorteilhaft, dass die angesprochene Verrottung weitgehend unterbunden wird. So lässt sich, in wünschenswerter Weise, die Elastizität des erfindungsgemäßen Holzkörpers über diejenige anheben, die das ursprüngliche Holzmaterial bzw. bekannte beschichtete Holzplatten aufweisen. Das ausgetrocknete Latex/Klebstoffgemisch, d.h. Kautschuk, verbindet miteinander in Verbund gebrachte Holzteile. Je nach Form und Klebstoffgehalt kommt die Elastizität unterschiedlich zum Tragen. Speziell bei Schichtplatten ist die Biegeelastizität höher. Diese Elastizität lässt sich durch den Imprägnierungsgrad steuern. Weiterhin ist es von Vorteil, dass die erfindungsgemäßen Produkte unter Einbezug hauptsächlich natürlicher Ausgangsprodukte wie Naturkautschuk und Holz hergestellt werden können.

Im Rahmen der Erfindung spielt, wie gezeigt, die Imprägnierung des Holzes mit dem Latex/Klebstoffgemisch, eine bedeutsame Rolle. So bietet es sich an, aus dünnen Holzplatten Sperrholz oder Multiplexplatten oder dgl. herzustellen. Für manche Produkte sind auch Stäbe und Stangen sinnvoll. Solche Platten können auf konventionelle Art und Weise durch Zerspanen (Sägen, Drehen, Fräsen, Bohren, Schleifen usw.) bearbeitet werden. Aus Furnieren sind auch Formteile pressbar, die mit Holz allein nicht hergestellt werden können oder zumindest stabiler sind als Holz. Solche unter Einbezug von Latex gefertigte Holzkörper zeichnen sich insbesondere dadurch aus, dass sie gegenüber konventionellen nur mit Leimen hergestellten Holzkörpern eine verbesserte Kerbschlagzähigkeit aufweisen und bei Bruch keine losen Splitter entstehen, da diese durch die Latexbestandteile in der Verklebung gebunden werden. Es können auch massive oder bereits fertiggestellte Holzwerkstoffe mit dem Kautschuk-Latex getränkt werden. Gelingt es, dass der Kautschuk-Latex den Holzwerkstoff durchdringt, dann stellen sich auch z.B. für massive Werkstoffe (Vollholz) vorteilhafte neue Eigenschaften ein, insbesondere eine verbesserte Verrottungsresistenz. Die Elastizität erhöht sich gleichermaßen wie die Kerbschlagzähigkeit. Es hat sich herausgestellt, dass beim Imprägnieren, je nach Holzart, Eindringtiefen von mindestens 10 mm erreicht werden, wobei als grober Rahmen etwa 10 bis 40 mm angegeben werden könnte. Diese Eindringtiefen können auch überschritten werden, wenn Druck und/oder erhöhte Temperatur angewendet werden. Schließlich ist es möglich, sehr kleine Teile, z.B. Holzspäne, erfindungsgemäß mit einem Kautschuk-Latex/Klebstoffgemisch zu tränken. Durch das Eintrocknen des Kautschuk-Latex und des Klebstoffs entsteht ein Holzkörper gemäß der Erfindung, in den die Holzspäne fest eingebunden sind. Die Austrocknung kann in Formen erfolgen. Die ausgetrocknete Masse kann bearbeitet werden, um jeweils bestimmte Formen zu bekommen. Bei den Produktideen erfordern manche eine Verarbeitung auf diese Weise.

Je nach Geometrie des Holzkörpers kann die Kerbschlagzähigkeit höher liegen als beim ursprünglichen Holzausgangsmaterial. Die Kerbschlagzähigkeit des erfindungsgemäßen Holzkörpers entspricht mindestens derjenigen des Ausgangsmaterials (d.h. des nicht behandelte Holzwerkstücks). Durch die Verbindung verschiedener Holzanteile durch den Kautschuk-Latex bzw. das Kautschukmaterial kann sich daraus eine wünschenswerte Verstärkung ergeben. Dies hängt von der Geometrie und den Beanspruchungseinrichtungen ab. Beschädigungen und Macken spielen bei dem erfindungsgemäßen Werkstoff keine relevante Rolle. Ein auftretender optischer Mangel wird durch die Verbesserung verschiedener Eigenschaften, wie insbesondere der Anhebung der Elastizität, aufgewogen. Nicht imprägniertes Holz unterliegt bei Beschädigung einer verstärkten Verrottung.

Überraschend ist es, dass der erfindungsgemäße Holzkörper, insbesondere Verbundholzkörper, wenn er beispielsweise in Einrichtungen herangezogen wird, die einer starken Geräuschübertragung unterliegen, zu einer verminderten Geräuschübertragung führt.

Holzschichtverbundkörper, wie sie vorstehend beschrieben wurden, weisen zudem den Vorteil auf, dass der geschlossene Gummifilm zwischen den einzelnen Holzschichten das Eindringen von Wasser und damit ein Quellen und eine Schwindung der Verbundkörper signifikant vermindert. In Einzelfällen kann es dennoch zweckmäßig sein, die Außenflächen erfindungsgemäßer Holzschichtverbundkörper mit einem wasserabweisenden Lack zu versehen. Holzschichtverbundkörper, die keine solche Lackschicht oder eine wasserabweisende Oberfläche aufweisen, zeigen in Einzelfällen im Bereich der obersten Schickt im Verbundkörper ein ungünstiges Quell- und Schwindverhalten bei Kontakt mit Wasser, das dazu führen kann, dass sich diese Schicht vom Verbund löst. Zudem kann Wasser auch auf den Seitenflächen entlang der Plattenoberflächen eindringen. Auch dies kann durch das Aufbringen einer wasserdichten Lackbeschichtung unterdrückt werden.

Ebenso werden durch die erfindungsgemäße Holzschichtverbundstruktur Vibrationen gedämpft und der Wärmetransport vermindert. Zudem weisen die Holzkörper eine sehr hohe Energieabsorption und -dissipation auf und brechen auch nach Überschreiten der maximalen Kraft nicht vollständig. Durch die elastische Verklebung können auftretende Kräfte gut kompensiert und Spannungen abgebaut werden. Zudem können erfindungsgemäße Holzkörper geringe Eigenspannungen und einen geringen Plattenverzug aufweisen.

Erfindungsgemäße Holzkörper zeigen ferner den Vorteil, dass sie bei ihrer Verarbeitung zu Folgeprodukten die Anwendung neuer Fertigungsmethoden ermöglicht. So können beispielsweise Stangen oder dünne Holzschichtdekore aus dem Holzkörper aufgrund seiner elastischen Eigenschaften besser verformt und eingepasst werden als massive oder konventionell hergestellte Werkstücke gleicher Form. Dies ermöglicht neue Verarbeitungswege. Zu den besonderen Vorteilen des erfindungsgemäßen Holzkörpers ist zu erwähnen, dass er ökologisch ist. Er greift vorzugsweise auf nachwachsende Rohstoffe zurück und ist dadurch nachhaltig. Zudem lässt er sich ohne weiteres rezyklisieren. Seine längere Lebensdauer erhöht die Nachhaltigkeit gegenüber einem reinen Holzprodukt. Vorteilhaft ist es, dass der Energieeinsatz für einen Verbraucherzyklus geringer als bei einem reinen Holzprodukt ist. Darüber hinaus bestehen die vorteilhaften Eigenschaften der erfindungsgemäßen Holzwerkstoffe in den deutlich geringen Unterhaltskosten. So müssen Holzfenster oder Holzmaterialien von Booten regelmäßig gestrichen werden. Diese Kosten werden durch die Holzkörper deutlich vermindert, wobei die guten Eigenschaften des Holzes beibehalten werden.

Anschließend wird die Erfindung anhand von Beispielen noch näher erläutert.

Beispiel 1: Herstellung dünner Klebstofffugen

Um die Scherfestigkeit des Latex in einem Schichtverbund beurteilen zu können, wurden Holzbretter nach DIN EN 302-1:2011 mit Latex verklebt, um aus den daraus zugeschnittenen Prüfkörpern die Zugscherfestigkeit des Holz-Latex Verbundes zu bestimmen.

Normalklimatisierte Buchenbretter mit einer genügend hohen, durchschnittlichen Dichte von ($659 \pm 17$) kg/m$^3$ wurden auf eine Größe von mindestens 300 x 130 mm$^2$ zugeschnitten, auf 5 mm Dicke gehobelt und gereinigt und sauber gehalten. Innerhalb von 24 h wurden jeweils zwei aus einem Ursprungsbrett stammende Bretter gespiegelt verklebt. Es wurden vier verschiedene Klebstoffvariationen getestet. Bei Raumtemperatur wurden vier Platten gestapelt in einer Presslehre, getrennt durch Neoprenschichten, bei einem Pressdruck von 1,2 N/mm$^2$ für 22 h in einer Labor-Furnierpresse von Zschokke verpresst. Ebenso wurden vier Platten nebeneinander auf Aluminiumplatten bei einem Pressdruck von 1,2 N/mm$^2$ für 23 h verpresst, wobei die Temperatur innerhalb 4,5 h auf 80 °C erhöht und für 3 h bei 80°C gehalten wurde, gefolgt von einer sehr langsamen Abkühlphase. Die vier Platten wurden jeweils auf zweierlei Weisen verklebt. Zwei Platten wurden mit GIVUL LA Latex (ProChemie Limited, Trockensubstanzgehalt 60,5 %) und zwei Platten mit einer 4,3:1-Mischung Kautschuk : Weißleim verklebt, derart, dass mithilfe eines Spachtels ein Holzbrett durchgehend mit einem Latexfilm benetzt wurde, bevor es mit dem Zwillingsbrett zusammengebracht wurde. Als Weißleim wurde Miracol 6360 von Geistlich (eine 46,5 %ige Polyvinylacetat-Dispersion) verwendet. Der Weißleim und der Latex wurden mit einem Holzstück gut verrührt, bevor die Mischung eingesetzt wurde.

Diese vier Verklebungen werden im Folgenden mit "L20", "L80", "LM20" und "LM80" abgekürzt, wobei "L" Latex, "LM" eine Latex-Miracol Mischung und die Zahl die Verpressungstemperatur bezeichnet.

Die Zugscherfestigkeit der Verklebungen $f_v$ wurde an einer Universalprüfmaschine Zwick/Roell Z010 anhand der DIN EN 302-1:2011 bestimmt. Zur Prüfung der Scherfestigkeit von Klebeverbindungen werden zwei überlappende und verklebte Holzplatten mit einer Längszugkraft bis zum Bruch belastet.

Aus diesen Platten wurden die Prüfkörper nach sieben Tagen Klimatisierung der DIN nach zugeschnitten und am folgenden Tag geprüft. Von jedem verklebten Teil wurden mittig fünf Streifen mit (20,0 ± 0,2) mm Breite geschnitten, die halbiert zehn Prüfkörper der Länge (150 ± 5) mm in Faserrichtung ergaben. Die Überlappung kam dadurch zustande, dass im Abstand von (10,0 ± 0,1) mm Sägeschnitte der Breite (2,5 ± 0,5) mm quer zur Holzfaser, auf beiden Seiten jeweils einer, angebracht wurden. Diese müssen ein Brett und vollständig die Klebstoffschicht trennen ohne das zweite Brett zu durchdringen. Zur Prüfung wurde der Prüfkörper mit seiner Längsachse parallel zur Belastungsrichtung in die Einspannbacken der Prüfmaschine eingespannt. Ein Zwick-Ansetzaufnehmer WN:180765 wurde so an die Probe geklemmt, dass er die Dehnung der Überlappung messen konnte. Mit einer Prüfgeschwindigkeit von 1 mm/min wurden die Bretter auseinandergezogen und die hierzu notwendige Zugkraft aufgenommen. Mit der Höchstkraft $F_{max}$ lässt sich die Scherfestigkeit wie folgt berechnen:

$$f_v = F_{max}\,/A = F_{max}/200\,mm^2$$

Es wurden jeweils 20 Prüfkörper gemessen, deren gemittelte Ergebnisse in Tabelle 1 angegeben sind. Da Latex relativ schwach an das Holz bindet, ist die Klebefestigkeit weit kleiner als die des Holzes und es kann kein Holzbruch beobachtet werden. Die Holzdichte ist auch aus diesem Grund sekundär.

**Tabelle 1:** Feuchtigkeit u [%], Zugscherfestigkeit $f_v$ [N/mm²] und Auslenkung bei maximaler Kraft. dL [%] einiger Latex-Verklebungen.

| | Feuchtigkeit | | | Zugscherfestigkeit | | | Auslenkung | | |
|---|---|---|---|---|---|---|---|---|---|
| | u | σ | $c_v$ | $f_v$ | σ | $c_v$ | d L | σ | $c_v$ |
| L20 | 13,93 | 0,12 | 0,888 | 0,99 | 0,11 | 11,2 | 2,2 | 0,4 | 18,4 |
| L80 | 13,0 | 0,3 | 2,53 | 1,25 | 0,14 | 11,2 | 2,1 | 0,8 | 38,2 |
| LM20 | 14,05 | 0,13 | 0,939 | 1,69 | 0,17 | 10,2 | 2,1 | 0,7 | 31,5 |
| LM80 | 13,2 | 0,3 | 2,03 | 1,81 | 0,23 | 12,6 | 2,3 | 0,8 | 36,2 |

Die Zugscherfestigkeit der mit Latex verklebten Buchenholzbretter lässt sich durch die Prozesstemperatur und die Zugabe von Leim variieren. Für beide mit Leim und Latex verklebten Fugen konnten bei beiden Verarbeitungstemperaturen bessere Zugscherfestigkeitswerte bestimmt werden.

Beispiel 2: Furnier-Sperrholzplatten

Alle Furnier-Sperrholzplatten (Ply Wood, PW) wurden in einer Labor-Furnierpresse mit einer Pressfläche von etwa (60 cm²) von Zschokke verpresst, wobei der Pressdruck hydraulisch eingestellt werden kann. Allgemein wurden die einzelnen Furnierschichten mit einem Spachtel flächendeckend mit Latex und einer weiteren Furnierlage in Sperrrichtung bedeckt, bis die so entstehende Platte gewünschte Dicke beziehungsweise gewünschte Anzahl Furnierschichten enthielt. Dann wurde diese Platte symmetrisch oben und unten mit einer Neoprenlage und Mitteldichten Holzfaserplatte (MDF) abgedeckt und in die Furnierpresse transferiert. Im Falle von einer erhöhten Presstemperatur kamen statt Neopren- und MDF-Platten Aluminiumplatten zur Anwendung.

Mit den 1,4 mm dicken, gefügten Messerfurnieren aus Fichte wurden drei Sperrholzplatten in hergestellt. Die 12-lagige Sperrholzplatte "PW-F12L20" wurde mit GIVUL LA Latex (siehe 1.1) bei Raumtemperatur für 12 h bei einem Pressdruck von etwa 1,0 hergestellt. Ähnlich "PW-F12L80" allerdings wurde dabei bei einem Pressdruck von etwa 0,9 N/mm² die Presstemperatur innerhalb 2 h auf 80 °C erhöht und für weitere 5 h bei dieser Temperatur belassen. Es wurde darauf geachtet, dass die gepresste Platte sehr langsam abkühlt. Für "PW-F11LM20" wurde der Latex volumetrisch eins zu eins mit Weißleim (46,5 % Polyvinylacetat, Miracol 6360, Geistlich) gut vermischt, resultierend in einer 1,1:1-Mischung Kautschuk: Polyvinylacetat. Die 11-lagige "PW-F11LM20"-Platte wurde bei einem siebenstündigen Pressdruck von etwa 1 N/mm$^2$ bei Raumtemperatur verpresst.

Die 5-lagige "PW-B5S" -Platte aus 2,2 mm dicken Buchenfurnieren wurde ebenfalls bei Raumtemperatur und einem Pressdruck von etwa 1,2 N/mm$^2$ für 16 h hergestellt. Die 5-lagige "PW-F5"-Platte aus 3,4 mm dicken Fichten-Schälfurnieren wurde bei einem Pressdruck von etwa 1,2 N/mm$^2$ Raumtemperatur, für 13 h hergestellt. Der durchschnittliche Verbrauch an Latex betrug etwa 0.58 l$_{Latex}$/m$^2$.

Die 3, 5 und 7-lagigen Sperrhölzer "PW-BF3", "PW-BF5" und "PW-BF7" aus Buchen-Deckfurnier wurden ebenfalls bei Raumtemperatur mit einem Pressdruck von etwa 1.2 N/mm$^2$ in einem Durchgang für etwa 20 h verpresst; der durchschnittlicher Verbrauch an Latex betrug etwa 0,4 l$_{Latex}$/m$^2$. Die Multiplexplatte "PW-BF30" bestehend aus 30 Buchen-Deckfurnieren wurde innerhalb drei Tage bei Raumtemperatur modular aufgebaut, wobei vier Mal weitere Furnierlagen zugefügt wurden. Pressdruck etwa 1.0 N/mm$^2$ durchschnittlicher Latex-Verbrauch etwa 0,5 l$_{Latex}$/m$^2$.

Aus diesen Sperrholzplatten wurden jeweils 5 cm breite Prüfkörper für Biegeprüfungen ausgeschnitten. Die Länge dieser Prüfkörper wurde nach der DIN 52 186 für die Biegeversuche so gewählt, dass die Länge I der Platte die Beziehung I > 15 h erfüllen.

**A** Biegeprüfung

DIN 52 186 gibt die Richtlinien für den Biegeversuch von Holz an. Eine Universalprüfmaschine Zwick/Roell Type BZ1-MMZ100.ZW03 wurde zur Durchführung dieser Messung verwendet.

Statischer E-Modul

Der Elastizitätsmodul gibt den Zusammenhang zwischen mechanischer Spannung und Dehnung an und ist damit ein Maß für die Verformungssteifigkeit. Der Elastizitätsmodul kann auf unterschiedliche Art und Weise ermittelt werden. Der klassische Weg ist die statische, linear elastische Belastung eines Biegestabes bei gleichzeitiger Erfassung der Abhängigkeit zwischen Spannung und Dehnung, welche direkt den (Biege-) Elastizitätsmodul ergibt. GÖRLACHER (1984) beschreibt ein alternatives Vorgehen zur dynamischen Ermittlung des E-Moduls mittels Eigenfrequenzmessung (siehe dynamischer Modul). Der statische Biegeelastizitätsmodul E$_{statisch}$ berechnet sich nach der folgenden Gleichung, wobei erforderliche Größen durch eine Drei-Punkt-Biegemessung und Messung der relevanten geometrischen Größen des Biegestabes ermittelt wurden.

$$E_{statisch} = l^3/(4 \cdot b \cdot h^3) \cdot \Delta F/\Delta L$$

Dabei steht ΔF für eine beliebige Kraftdifferenz im elastischen Verformungsbereich und ΔL für die dieser Kraftdifferenz entsprechenden Durchbiegung. L bezeichnet die Stützweite, b die Breite und h die Höhe des Biegestabes.

Von allen Sperrhölzern wurden mindestens 7 Prüfkörper einer Sperrholzplatte gemessen und deren Ergebnisse gemittelt. Es wurde darauf geachtet, dass bei den Prüfungen die zugbelastete Seite der Prüfkörper ein Deckfurnier aufwies, dessen Faserrichtung der Zugbelastung entsprach. In Tabelle 2 sind die Elastizitätsmoduln zusammengestellt.

Tabelle 2: Statischer und Dynamischer E-Modul [N/mm$^2$] der Sperrhölzer

|  | Dichte | | | E$_{statisch}$-Modul | | | E$_{dynamisch}$-Modul | | |
|---|---|---|---|---|---|---|---|---|---|
|  | ρ | σ | c$_v$ | E$_{stat}$ | σ | c$_v$ | E$_{dyn}$ | σ | c$_v$ |
| PW-F12L20 | 536 | 30 | 5,66 | 860 | 100 | 12,2 | 3530 | 220 | 6,23 |
| PW-F12L80 | 568 | 19 | 3,35 | 980 | 60 | 5,86 | 2620 | 220 | 8,40 |
| PW-F11LM20 | 504 | 16 | 3,17 | 3100 | 300 | 10,2 | 6680 | 210 | 3,14 |
| PW-F5 | 547 | 13 | 2,38 | 5300 | 400 | 6,62 | 8000 | 600 | 7,50 |
| PW-B5 | 796 | 16 | 2,01 | 3100 | 1200 | 39,9 | 4800 | 500 | 10,4 |
| PW-BF7 | 895 | 23 | 2,57 | 1900 | 240 | 12,7 | 81000 | 14000 | 17,3 |
| PW-BF5 | 895 | 18 | 2,01 | 4100 | 1500 | 36,5 | 168000 | 11000 | 6,55 |
| PW-BF3 | 939 | 13 | 1,38 | 8600 | 2100 | 24,0 | 390000 | 30000 | 7,69 |

Biegefestigkeit

Die Biegefestigkeit $\sigma_F$ ist die maximale Spannung, die ein Biegestab der Krafteinwirkung nach DIN 52 186 entgegenbringt und lässt sich mit der unten angegebenen Gleichung berechnen. Die Bestimmung der Biegefestigkeit mittels eines Kraftsensors wurde in derselben Messung wie zur Bestimmung des Biegeelastizitätsmoduls durchgeführt. Es wurde darauf geachtet, dass die maximale Kraft $F_{max}$ innerhalb von (1.5 $\pm$ 0.5) min lag und dass die Jahrringe möglichst parallel zur Krafteinwirkung standen. Die Biegefestigkeit $\sigma_F$ ist gegeben durch

$$\sigma_F = (3 \cdot F_{max} \cdot L)/(2 \cdot b \cdot h^2)$$

mit den geometrischen Größen Stützweite $l \geq 15\ h$, Breite b und Höhe h des Biegestabes.

Im Zuge der Messung der Biegefestigkeit wurde bei maximaler Kraft $F_{max}$ auch die korrespondierende Auslenkung dL festgehalten. Diese hängt mit dem Biegeelastizitätsmodul zusammen. Die Auslenkung L wurde bei der Messung sowohl über einen mechanischen Wegaufnehmer als auch optisch mit einer Kamera aufgenommen. Die optische Wegaufnahme ist frei von den Einflüssen der Prüfapparatur auf die Auslenkung. Die Biegefestigkeiten der verschiedenen Sperrhölzer sind in Tabelle 3 gegeben.

**Tabelle 3:** Biegefestigkeit $\sigma_F$ [N/mm$^2$] und Auslenkung bei maximaler Kraft dL [mm] der Sperrhölzer

|  | Dichte | | | Biegefestigkeit | | | Auslenkung | | |
|---|---|---|---|---|---|---|---|---|---|
|  | $\rho$ | $\sigma$ | $c_v$ | $\sigma_F$ | $\sigma$ | $c_v$ | dL | $\sigma$ | $c_v$ |
| PW-F12L20 | 530 | 30 | 5,66 | 13,0 | 0,8 | 6.28 | 11.0 | 1,1 | 9,91 |
| PW-F12L80 | 568 | 19 | 3,35 | 21,6 | 1,3 | 5.90 | 18,8 | 1,0 | 5,44 |
| PW-F11LM20 | 504 | 16 | 3,17 | 34,1 | 2,3 | 6.64 | 13,8 | 1,3 | 9.09 |
| PW-F5 | 547 | 13 | 2,38 | 25,4 | 1,7 | 6,76 | 24 | 4 | 15,0 |
| PW-B5 | 796 | 16 | 2,01 | 28 | 3 | 11,8 | 9,0 | 2,2 | 24,1 |
| PW-BF30 |  |  |  | 9,0 | 1,0 | 11,1 | 34 | 9 | 25,7 |
| PW-BF7 | 895 | 23 | 2,57 | 36,2 | 2,0 | 5.66 | 13,3 | 1,3 | 9,43 |
| PW-BF5 | 895 | 18 | 2,01 | 39 | 6 | 15,9 | 13,8 | 0,8 | 6,06 |
| PW-BF3 | 939 | 13 | 1.38 | 57 | 9 | 16,0 | 15 | 3 | 20,0 |

Arbeit bis zur maximalen Kraft

Die von einem Prüfkörper bis zur maximalen Kraft geleistete Arbeit ist das Integral aus Kraft F über die Auslenkung L, welche im Rahmen des Biegeversuches ermittelt wurden. Sie kann als ein Maß für die Zähigkeit des Biegestabes gelten. Die Arbeit bis zur maximalen Kraft ist in Tabelle 4 angegeben.

Tabelle 4: Arbeit bis zur maximalen Kraft W [Nmm] und Dämpfung $\delta$ [1] der hergestellten Sperrhölzer.

|  | Dichte | | | Arbeit | | | Dämpfung | | |
|---|---|---|---|---|---|---|---|---|---|
|  | $\rho$ | $\sigma$ | $c_v$ | W | $\sigma$ | $c_v$ | $\delta$ | $\sigma$ | $c_v$ |
| PW-F12L20 | 530 | 30 | 5,66 | 3800 | 500 | 12,7 | 0,0152 | 0,0013 | 8,55 |
| PW-F12L80 | 568 | 19 | 3,35 | 9000 | 1000 | 11,3 | 0,0220 | 0,0016 | 7,27 |
| PW-F11LM20 | 504 | 16 | 3,17 | 11100 | 1500 | 13,9 | 0,0077 | 0,0007 | 9,09 |
| PW-F5 | 547 | 13 | 2,38 | 19000 | 4000 | 21,3 | 0,0069 | 0,0007 | 10,1 |
| PW-B5 | 796 | 16 | 2,01 | 4800 | 1300 | 27,8 | 0,0134 | 0,0022 | 16,4 |
| PW-BF30 |  |  |  | 9000 | 3000 | 29,9 |  |  |  |
| PW-BF7 | 895 | 23 | 2,57 | 1800 | 300 | 14,0 | 0,023 | 0,010 | 43,5 |
| PW-BF5 | 895 | 18 | 2,01 | 1100 | 120 | 11,5 | 0,034 | 0,024 | 70,0 |

(fortgesetzt)

| | Dichte | | | Arbeit | | | Dämpfung | | |
|---|---|---|---|---|---|---|---|---|---|
| | $\rho$ | $\sigma$ | $c_v$ | W | $\sigma$ | $c_v$ | $\delta$ | $\sigma$ | $c_v$ |
| PW-BF3 | 939 | 13 | 1,38 | 550 | 210 | 38,7 | 0,08 | 0,06 | 75,0 |

**B** Eigenschwingung

Ein Biegestab beziehungsweise eine Biegeplatte wird auf zwei Auflager gelegt, derart, dass die Knoten der Eigenschwingung bei Anregung den Auflagepunkten entsprechen. Für die Grundschwingung entspricht das etwa einem Fünftel der Stablänge von den Stabenden aus gesehen. Die Auflager sind zur Reduktion von Störungen mit einem Schaumstoff gepolstert. Der Stab wird mit einem Gummihämmerchen zur Schwingung angeregt, welche über einen piezoelektrischen Taster digitalisiert wird.

Dynamischer E-Modul

Eine angeschlossene elektronische Datenverarbeitung, gegeben durch eine Grindo-Sonic-Messapparatur, erleichtert das Ablesen der Eigenfrequenz. Die Grundfrequenz $f_0$ wird zur Berechnung des E-Moduls $E_{dynamisch}$ benötigt:

$$E_{dynamisch} \approx (4\pi^2 \cdot f_0{}^2 \cdot l^4 \cdot \rho)/(m_n{}^4 \cdot i^2) \quad \text{mit} \quad i = \sqrt{(I/A} = h/\sqrt{12},$$

wobei $\rho$ die Dichte des Stabes, $m_n{}^4$ eine Konstante mit Wert 0.5006 für die Grundschwingung und i den Trägheitsradius, der sich aus der Stabhöhe h ergibt, angibt. Die Ergebnisse der Messungen sind in der vorstehenden Tabelle 4 angegeben.

Dämpfung

Die Dämpfung $\delta$ als der Abklingkoeffizient der Eigenschwingung kennzeichnet ebenfalls energiedissipierende Prozesse. Sie charakterisiert die Form der Einhüllenden des Amplitudenabfalls $e^{-\delta t}$ über die Zeit t. Mithilfe des NFA-Tools wurde diese bestimmt. Die Maxima und Minima im Oszillogramm bilden diese Abklingkurve, welche ab dem Wendepunkt exponentiell angenährt und schließlich gemittelt wurden. Der Dämpfungskoeffizient der verschiedenen Sperrhölzer ist in der vorstehenden Tabelle 4 angegeben zu finden.

Diskussion:

Im Drei-Punkt Biegeversuch versagten die Sperrholzprüfkörper durch Delamination im Bereich der Druckbelastung. Dennoch konnten die Prüfkörper nicht bis zu einem Gesamtbruch gebracht werden, da die Latexschichten die Furniere immer noch zusammenhielten. Die Prüfkörper konnten beliebig ausgelenkt werden und absorbieren viel Energie. Auch nach Erreichen der maximalen Kraft kann die Spannung auf einem geringfügig niedrigeren Niveau für einen großen Dehnungsbereich gehalten werden. Bis zum Bruch aller Furnierlagen ist eine sehr weite Auslenkung der Prüfkörper möglich.

**Patentansprüche**

1. Holzkörper mit einem Gehalt an Kautschuk und Klebstoff, erhältlich durch ein Verfahren umfassend das Imprägnieren von mindestens zwei Holzteilen mit einem Gemisch aus wässrigem Kautschuk-Latex und wässrigem Klebstoff, insbesondere in Form eines Leims, das Inkontaktbringen der imprägnierten Oberflächen verschiedener Holzteile, das Verpressen der Holzteile zu einem Verbundkörper und anschließendes Trocknen.

2. Holzkörper nach Anspruch 1, **dadurch gekennzeichnet, dass** als wässriger Kautschuk-Latex ein vulkanisierter bzw. vor-vulkanisierter Kautschuk zur Einstellung elastischer Eigenschaften eingesetzt wird.

3. Holzkörper nach Anspruch 1 oder 2, **dadurch gekennzeichnet, dass** er auf Holz von Kiefer, Lärche, Fichte, Buche, Eukalyptus, Tanne, Pappel oder Pinie, insbesondere vorgesehen für Bauzwecke, oder Buche, Kiefer, Fichte, Eiche, Esche, Kastanie, Birke, Kirsche, Ahorn oder Nuss, insbesondere vorgesehen für Möbelausstattung, beruht.

**4.** Holzkörper nach mindestens einem der Ansprüche 1 bis 3, **dadurch gekennzeichnet, dass** er zur Eigenschaftssteuerung, insbesondere zur Verbesserung der Beständigkeit und der mechanischen Eigenschaften, Zusatzstoffe enthält, insbesondere Pigmente, Farbstoffe, Füllstoffe, insbesondere Ruß, Weichmacher, UV-Stabilisatoren, Antioxidantien, Antiozonantien, Bakterizide, Fungizide, Insektizide, Flammschutzmittel, aliphatische oder aromatische Harze, inerten oder reaktiven Phenolharzen und/oder Kurzfasern.

**5.** Holzkörper nach mindestens einem der Ansprüche 1 bis 4, **dadurch gekennzeichnet, dass** der Kautschuk in Form eines Naturkautschuks herangezogen wird.

**6.** Holzkörper nach mindestens einem der Ansprüche 1 bis 5, **dadurch gekennzeichnet, dass** er als Holzplatte, Holzkörper mit Schichtstruktur, insbesondere als Sperrholz, oder Formteil aus verpressten kleinstückigen Holzteilen, insbesondere Holzspänen, vorliegt.

**7.** Holzkörper nach mindestens einem der Ansprüche 1 bis 6, **dadurch gekennzeichnet, dass** er zur Versiegelung der Oberfläche des Holzkörpers Oberflächenbeschichtungen aufweist, gegebenenfalls Anstriche.

**8.** Holzkörper nach mindestens einem der Ansprüche 1 bis 7, erhältlich durch Imprägnieren von Holzplatten oder Holzfurnieren mit einer Mischung aus einer wässrigen Kautschuk-Latex und einem wässrigen Klebstoff, Verpressen der Holzplatten bzw. Holzfurniere zu einem Verbundkörper, insbesondere bei erhöhter Temperatur, und durch anschließendes Trocknen.

**9.** Holzkörper nach Anspruch 8, **dadurch gekennzeichnet, dass** die Holzplatten oder Holzfurniere eine Dicke von 0,3 bis 6 mm, insbesondere von 0,8 bis 4 mm, aufweisen.

**10.** Holzkörper nach mindestens einem der Ansprüche 1 bis 9, **dadurch gekennzeichnet, dass** als wässriger Klebstoff ein formaldehydfreier Leim, insbesondere ein Weisleim, oder ein Harz, insbesondere ein Acrylharz, herangezogen wird.

**11.** Verwendung des Holzkörpers nach mindestens einem der vorhergehenden Ansprüche in Gebäuden, Einrichtungen und Ausstattungen von Wohnungen und Fahrzeugen auf dem Lande und dem Wasser.

**12.** Verwendung nach Anspruch 11 in Fenstern, Türen, Dachstühlen, Lattungen, Zäunen, Dachdeckungen, Pergola/Karbholz/Pavillons, Federholzleisten, Trägerelementen aller Art, insbesondere Schildern oder mit statischer Aufgabe, Brückenteilen, Stegen und Anlegestellen am Wasser, für Restaurationen an feuchten Stellen, Fußbodenbelägen, Möbeln, einschließlich Gartenmöbeln und Parkbänken, Handläufen, Arbeitsplatten, Lattenrosten für Betten, Design-Lichtschaltern, Türdrückergarnituren und/Armaturen, Fahrzeugen, im Bootsbau/Schiffbau, in Wohnwagen, Anhängern, Handwagen, Sitzschalen für Autos, Kindersitzen und Schwingungsdämpfern.

**13.** Verfahren zur Herstellung eines Holzkörpers nach mindestens einem der Ansprüche 1 bis 10, **dadurch gekennzeichnet, dass** gegebenenfalls vorgetrocknete und/oder vorerhitzte Holzteile, insbesondere in Form von Platten oder Furnieren, mit einer Mischung aus Kautschuk-Latex- bzw. einer kolloidalen Kautschuk-Dispersion und einem wässrigen Klebstoff, gegebenenfalls bei erhöhter Temperatur, imprägniert, die imprägnierten Oberflächen verschiedener Holzteile miteinander in Kontakt gebracht, zu einem Verbundkörper verpresst und anschließend getrocknet werden.

**14.** Verfahren nach Anspruch 13, **dadurch gekennzeichnet, dass** das Gemisch aus wässrigem Klebstoff und Kautschuk-Latex für das Imprägnieren auf eine Temperatur von mindestens etwa 30°C eingestellt wird.

**15.** Verfahren nach mindestens einem der Ansprüche 13 oder 14, **dadurch gekennzeichnet, dass** das Verpressen bei einem Druck von 0,5 bis 2,5 N/mm$^2$, insbesondere 0,8 bis 1,5 N/mm$^2$, durchgeführt wird.

**EP 2 727 690 A1**

Europäisches
Patentamt
European
Patent Office
Office européen
des brevets

**EUROPÄISCHER RECHERCHENBERICHT**

Nummer der Anmeldung

EP 13 19 1218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2011/051339 A1 (STELZER ROLAND [DE]; MUELLER ANDREAS [DE]) 5. Mai 2011 (2011-05-05) * Seite 10, Zeilen 25-27; Ansprüche 15-16; Beispiel 1 * ----- | 1-15 | INV. B27K3/15 B27M1/02 B27M3/00 B32B21/04 B32B21/13 C08H8/00 |
| A | WO 2009/087262 A1 (BORENOVA OY [FI]; BOREN HANNU [FI]) 16. Juli 2009 (2009-07-16) * Anspruch 1; Beispiel 4 * ----- | 1-10 | ADD. C08L7/02 |
| A,P | EP 2 639 027 A1 (TEHOMET OY [FI]) 18. September 2013 (2013-09-18) * Anspruch 1 * ----- | 1-15 | |

**RECHERCHIERTE SACHGEBIETE (IPC)**

B27K
B27M
B32B
C08H
C08L

Der vorliegende Recherchenbericht wurde für alle Patentansprüche erstellt

| Recherchenort | Abschlußdatum der Recherche | Prüfer |
|---|---|---|
| München | 13. Januar 2014 | Bjola, Bogdan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

16

# EP 2 727 690 A1

**ANHANG ZUM EUROPÄISCHEN RECHERCHENBERICHT
ÜBER DIE EUROPÄISCHE PATENTANMELDUNG NR.**

EP 13 19 1218

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2014

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO | 2011051339 | A1 | 05-05-2011 | EP | 2493670 | A1 | 05-09-2012 |
| | | | | WO | 2011051339 | A1 | 05-05-2011 |
| WO | 2009087262 | A1 | 16-07-2009 | DK | 2229263 | T3 | 27-05-2013 |
| | | | | EA | 201001123 | A1 | 28-02-2011 |
| | | | | EP | 2229263 | A1 | 22-09-2010 |
| | | | | ES | 2407847 | T3 | 14-06-2013 |
| | | | | FI | 20080017 | A | 10-07-2009 |
| | | | | JP | 5285086 | B2 | 11-09-2013 |
| | | | | JP | 2011509201 | A | 24-03-2011 |
| | | | | WO | 2009087262 | A1 | 16-07-2009 |
| EP | 2639027 | A1 | 18-09-2013 | EP | 2639027 | A1 | 18-09-2013 |
| | | | | FI | 9863 | U1 | 08-11-2012 |

EPO FORM P0461

Für nähere Einzelheiten zu diesem Anhang : siehe Amtsblatt des Europäischen Patentamts, Nr.12/82

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 225251 A

**In der Beschreibung aufgeführte Nicht-Patentliteratur**

- *Journal of Biological Sciences,* 2006, vol. 6 (3), 490-500